# EUROPÄISCHE PATENTSCHRIFT

(11) **EP 1 227 633 B1**
(45) Veröffentlichungstag und Bekanntmachung des Hinweises auf die Patenterteilung: **16.03.2005**
(21) Anmeldenummer: 01114463.1
(22) Anmeldetag: 15.06.2001
(51) Int. Cl.: H04L 12/28, H04L 29/06

(54) **Verfahren und Anordnung zum Zugriff auf ein IP-Netz und zur Arbeit in diesem**
Method and system for accessing an IP-network and for working with it
Procédé et système d'accès à un réseau IP et pour travailler avec ce dernier

(30) Priorität: 16.10.2000 DE 10051147
(43) Veröffentlichungstag der Anmeldung: 31.07.2002
(73) Patentinhaber: SIEMENS AKTIENGESELLSCHAFT, 80333 München (DE)
(72) Erfinder: Andersen, Frank-Uwe, 10625 Berlin (DE)

(56) Entgegenhaltungen:
- GB-A- 2 348 083
- US-A- 5 517 636
- US-A- 5 787 300
- US-A- 5 964 836
- "INTERNET SOFT PARCEL DELIVERY AND/OR ARCHIVING SYSTEM" IBM TECHNICAL DISCLOSURE BULLETIN, IBM CORP. NEW YORK, US, Bd. 40, Nr. 6, 1. Juni 1997 (1997-06-01), Seiten 177-179, XP000728376 ISSN: 0018-8689

## Beschreibung

Die Erfindung betrifft ein Verfahren zum Zugriff auf ein IP-Netz, insbesondere das Internet, und zur Arbeit mit diesem bzw. mit an diesen angeschlossenen Ressourcen sowie eine Anordnung zur Durchführung dieses Verfahrens.

Für die wirtschaftliche und soziale Entwicklung in den Industrieländern sind seit Jahren die Entwicklung des Internet zu einer weltumspannenden Informations-, Kommunikations- und Handels-Infrastruktur und die nicht weniger dynamische Entwicklung der mobilen Telekommunikation prägend. Das Internet gewinnt - neben der Nutzung als Kommunikationsmittel und Informationsquelle für hunderte Millionen Menschen - zunehmend als Bedeutung als Einkaufsquelle. Insbesondere der Handel mit Software, Büchern und Reisen läuft bereits zu einem nennenswerten Anteil über das Internet (speziell das World Wide Web) ab, zunehmend wird aber auch ein breites Spektrum sonstiger Waren und Dienstleistungen über das Internet bestellt und bezahlt. Auch die vielfältigen Auktions-, Gewinnspiel- und Kommunikationsmöglichkeiten (Chat Foren) ziehen eine ständig zunehmende Anzahl von Nutzern an.

Die schnelle und breite Durchsetzung des Internet als weltweites Datennetz ist nicht zuletzt auf die Leistungsfähigkeit des die Datenkommunikation regelnden Standardprotokolls, nämlich des HTTP(Hypertext Transfer Protocol) zurückzuführen. Auf der Grundlage dieses Protokolls bzw. des Protokolls TCP ist über das Internet bekanntlich nicht nur die Übermittlung von Textnachrichten, sondern auch von Sprachnachrichten (Voice over IP), Grafiken, Standbildern und Bewegtbildern möglich. Deren Ausgabe kann an protokollkonform ausgelegten Endgeräten (für Bilder beispielsweise auf VGA-Farbmonitoren) mit hoher Qualität erfolgen. In Form von VRML-Dokumenten sind über das WWW auch Virtual-Reality-Szenen übertragbar, durch die man sich bewegen kann. Über in WWW-Dokumente eingebettete Links (Verknüpfungen) können auch weitere Dokumente - die auch auf anderen Servern gespeichert sein können - aufgerufen werden.

Eine kaum weniger bedeutsame Entwicklung hat die mobile Telekommunikation genommen. Für einen Großteil der Menschen in den Industrieländern wird das Mobiltelefon ("Handy") mehr und mehr zu einem universellen Kommunikations- und Informationsinstrument. Es wird auch zunehmend für die Bestellung und Bezahlung von Waren und Dienstleistungen genutzt. Diese Entwicklung hat durch die Einführung des mobilfunkgerechten Standards WAP (Wireless Application Protocol) für den Zugriff auf das Internet via Mobiltelefon zusätzlich an Dynamik gewonnen. Aufgrund dieses Protokolls und der zugehörigen Programmiersprache WML (Wireless Markup Language) können Besitzer von entsprechend ausgestatteten Mobiltelefonen Informationen und Dienstleistungen aus dem Internet abrufen.

In das Mobiltelefon ist hierfür ein spezieller Internet-Browser, der WAP-Browser, implementiert. Der standardmäßige Zugriff auf das WWW erfolgt hingegen mittels eines in den entsprechenden Endgeräten eingebauten Web-Browsers.

Die dem derzeitigen Mobilfunkstandard GSM immanenten Limitierungen hinsichtlich der übertragungsbandbreite und -geschwindigkeit haben unvermeidlich ganz wesentliche Einschränkungen bei der Nutzung des Internet bzw. von an dieses angeschlossenen Ressourcen über das WAP-Handy zur Folge. Abgesehen davon, daß ein Zugriff überhaupt nur auf entsprechend aufbereitete Internet-Seiten im WML-Format möglich ist (die längst nicht alle im Netz präsenten Unternehmen und Einrichtungen - von Privatpersonen ganz zu schweigen - bereitstellen), sind die Ein- und Ausgabe mühevoll und langsam. Die Übertragung von differenzierteren Grafiken und Bildern auf das Display eines Handys ist kaum sinnvoll, und die Darstellung von Farbe und Bewegtbildern nicht möglich.

Diesen Nachteilen steht indes der große Vorteil der Möglichkeit eines mobilen Zugriffs auf das Internet und dessen Ressourcen gegenüber. Zudem ermöglichen die derzeitigen Mobilfunkstandards auf einfache Weise eine hochgradig zuverlässige Authentisierung des Nutzers für den Netzzugriff.

Der Erfindung liegt daher die Aufgabe zugrunde, ein verbessertes Verfahren der gattungsgemäßen Art und eine entsprechende Anordnung anzugeben, die wesentlich erweiterte Nutzungsmöglichkeiten des Internet für Mobiltelefon-Benutzer bieten.

Diese Aufgabe wird hinsichtlich ihres Verfahrensaspektes durch ein Verfahren mit den Merkmalen des Anspruchs 1 und hinsichtlich ihres Vorrichtungsaspektes durch eine Vorrichtung mit den Merkmalen des Anspruchs 13 gelöst.

Dokument US 5,964,836 offenbart ein System" das zwei Sitzungen miteinander verbindet. Die erste Sitzung, ein Java Applet auf einem Server, wird mit einer zweiten Sitzung, einer 3270 Applikation auf einem Host Computer, auf einem Remote Computer über eine Java-Umgebung auf der Seite des Benutzers in einem Web Browser verbunden.

Die Erfindung schließt den grundlegenden Gedanken ein, beim Zugriff auf ein IP-Netz - speziell das Internet - eine Hybrid-Sitzung aus zwei parallel zueinander laufenden Sitzungen auf unterschiedlicher Protokollgrundlage zu etablieren. Hierdurch gelingt es, die Vorteile eines mobilen Zugriffs auf das IP-Netz zu wahren und zugleich die Limitierungen der GSM-Mobilfunknetze für den Nutzer weitgehend unwirksam zu machen.

Da insbesondere eine der beiden Sitzungen (Sessions) unter Nutzung des Standardprotokolls HTTP (bzw. TCP) abläuft, sind mit der erwähnten Hybrid-Sitzung die mit dem Standardprotokoll gebotenen Möglichkeiten des IP-Netzes auch für den über sein Mobiltelefon zugreifendenen Nutzer weitgehend verfügbar. Zugleich hat dieser den Vorteil des mobilen Zugriffs, so daß er - z. B. in weiter unten noch genauer erläuterten Applikationen - die Arbeit im IP-Netz gewissermaßen mit einer "Fernbedienung" ausführen kann. Mit der Erfindung wird in gewissem Sinne ein Fernsteuer- oder Fernwirk-Gateway geschaffen. Sie führt parallele Kommunikationsvorgänge auf getrennten Wegen auf eine einfache Interprozeßkommunikation zwischen zwei IP-Netz-Zugriffs- und Arbeitsprozessen auf einem Rechner (Server) zurück.

Insbesondere sind - anders als auf dem Display des WAP-Mobiltelefons - farbige Darstellungen mit hoher Auflösung und auch Bewegtbild-Darstellung möglich. Auch für den relativ einfachen und von einem WAP-Handy übertragungstechnisch gut zu bewältigenden Anwendungsfall der Anzeige eines Textdokumentes bietet das vorgeschlagene Verfahren Vorteile. Es entfällt nämlich das für den Benutzer lästige vielfache Verschieben des Anzeigefeldes beim Studium eines etwas längeren Textes, da die Anzeige auf einem großen Bildschirm erfolgen kann.

Schließlich bietet der Zugriff über das Mobiltelefon die bereits oben erwähnte Möglichkeit einer sehr einfachen und relativ zuverlässigen Nutzerauthentisierung und der dem GSM-Standard eigenen hohen Abhörsicherheit. Dies wirkt sich insbesondere für geschäftliche Transaktionen über das Internet positiv aus. Nachdem eine Kontrollverbindung vom WAP-Mobiltelefon zu einem Internet-Server hergestellt ist, kann das Verfahren im weiteren Verlauf allein mit einem separaten Ausgabegerät, speziell einem Farbmonitor mit großem Bildschirm, erfolgen. Für die Verfahrensdurchführung ist nur dieser Bildschirm und ein Internetanschluß erforderlich, aber keine Tastatur und keine der üblichen peripheren Komponenten eines PC. Alle Eingaben können auf dem Mobiltelefon erfolgen. Insofern ist das vorgeschlagene Verfahren auch grundsätzlich in Verbindung mit einem Internetzugang via Fernsehgerät vorteilhaft anwendbar.

Zur Hybridisierung der beiden erwähnten Sitzungen bzw. Netzzugangsarten (WAP bzw. "WEB") wird insbesondere ein mit JAVA-Servlets ausgestatteter Rechner ("WEB-Server") eingesetzt, wobei die Datenströme der WAP- bzw. WEB-Sitzung mittels einer - als solche bekannten - Interprozeßkommunikation interagieren.

Neben der oben erwähnten Variante der Initiierung der Hybrid-Sitzung mittels des Mobiltelefones als Endgerät mit eingeschränkter Protokollfähigkeit kann diese Initiierung - speziell die Etablierung der mit dem Standardprotokoll ablaufensden Sitzung - auch über ein Endgerät mit voller Protokollfähigkeit, also insbesondere einen nach dem HTTP-Protokoll arbeitenden PC, erfolgen. Weiterhin ist neben der oben erwähnten Ausführung mit einem reinen (optischen) Ausgabegerät als "Endgerät" der Standardprotokoll-Sitzung der Einsatz eines PC mit der üblichen Funktionalität möglich. Dann können gegebenenfalls Eingaben sowohl über dessen Peripherie als auch über die Tastatur oder gegebenenfalls (via Sprachsteuerung) auch über die Sprechkapsel des Mobiltelefons erfolgen.

Eine interessante Anwendung des vorgeschlagenen Verfahrens besteht darin, auf dem gemäß Standardprotokoll arbeitenden Ausgabe- oder Endgerät ablaufende Anzeigevorgänge - beispielsweise im Rahmen einer Powerpoint-Präsentation - über das Mobiltelefon zu steuern. Entsprechende Ausstattung vorausgesetzt, kann hierzu beispielsweise in vorteilhafter Weise ein Großbild-Fernsehgerät eingesetzt werden.

Eine weitere interessante Anwendung ist ein "Internet-Shopping durch die Schaufensterscheibe", bei dem ein Mobiltelefon-Benutzer über sein Handy eine WAP-Sitzung parallel zu einer Standardprotokoll-Sitzung aufbauen kann, die (permanent) auf einem PC hinter der Schaufensterscheibe eines geschlossenen Geschäftes oder auch auf einem eigens zu diesem Zweck im öffentlichen Raum installierten PC oder Warenausgabeautomaten läuft. Die auf dem Monitor dargestellte Webseite des Anbieters instruiert den Mobiltelefon-Benutzer über die Möglichkeit und Art und Weise des Zugriffs zum präsentierten Angebot und führt ihn durch die Schritte des Bestell- und Bezahlungsvorganges - die er über sein Handy ausführt.

Es versteht sich, daß die vorgeschlagene Lösung auch für weitere Anwendungsfälle der Nutzung von Internet-Ressourcen und für sonstige Fernbedienvorgänge via Mobiltelefon und Internet einsetzbar ist.

Aus den obigen Ausführungen wird bereits deutlich, daß die vorgeschlagene Lösung auch zu den Verfahrensaspekten korrespondierende Vorrichtungsaspekte hat, wozu insbesondere das Vorsehen zweier Endgeräte gehört, von denen eines die volle Protokollfähigkeit des IP-Netzes und das andere eine eingeschränkte Protokollfähigkeit hat, sowie eines Servers mit Mitteln zur Etablierung der beiden erwähnten Sitzungen und zur Gewährleistung der Interprozeßkommunikation zwischen diesen. Hierbei handelt es sich insbesondere um die bereits erwähnten JAVA-Servlets. In der derzeit praktisch wichtigsten Ausführung ist das eine der Endgeräte bzw. das Ausgabegerät ein PC mit Web-Browser, während das andere Endgerät ein WAP-Mobiltelefon ist.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine skizzenartige Darstellung in Form eines Funktions-Blockschaltbildes zur Erläuterung einer ersten Ausführungsform der Erfindung,
Fig. 2 eine skizzenartige Darstellung in Form eines Funktions-Blockschaltbildes zur Erläuterung einer zweiten Ausführungsform der Erfindung (Fernbedienungs-Applikation),
Fig. 3 eine skizzenartige Darstellung in Form eines Funktions-Blockschaltbildes zur Erläuterung einer dritten Ausführungsform der Erfindung (Shopping-Applikation) und
Fig. 4 eine skizzenartige Darstellung in Form eines Funktions-Blockschaltbildes zur Erläuterung einer vierten Ausführungsform der Erfindung (Infopunkt-Applikation).

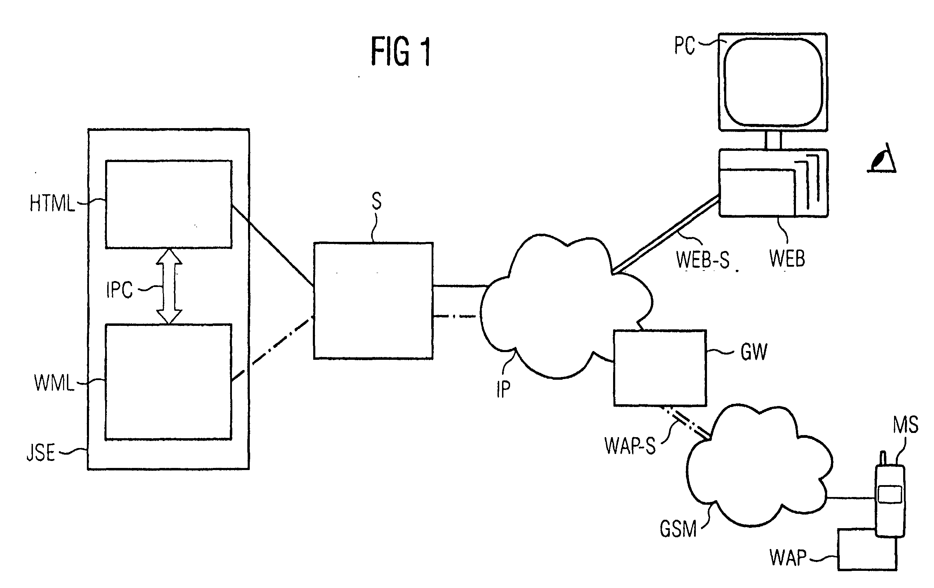

Die in den Figuren 1 bis 4 gezeigten Anordnungen haben weitgehend den gleichen Aufbau, so daß insoweit auch dieselben Bezugsziffern verwendet und die zu Fig. 1 gegebenen Erläuterungen im weiteren nicht wiederholt werden.

Fig. 1 zeigt schematisch eine Basisarchitektur für die aus derzeitiger Sicht bevorzugte Ausführung der Erfindung. Ein Mobiltelefon MS steht über ein GSM-Mobilfunknetz GSM (dessen Aufbau hier als bekannt vorausgesetzt wird) und einen Gateway-Server GW mit dem Internet IP in Verbindung, in dem ein Webserver S steht. Diesem ist eine JAVA-Servlet-Engine JSE zugeordnet, in der eine HTML-"Creation" HTML für einen herkömmlichen Internet-Browser sowie eine WML-Creation WML für einen WAP-Browser implementiert sind. Zwischen beiden besteht eine Interprozeßkommunikation IPC.

Neben dem Mobiltelefon MS ist an das Internet IP auch ein herkömmlicher Personalcomputer PC angeschlossen. In diesem ist der erwähnte Internet-Browser WEB implementiert, während im Mobiltelefon ein WAP-Browser WAP implementiert ist. Mit dem Personalcomputer PC ist im Internet eine HTTP-Session WEB-S etabliert, während mit dem Mobiltelefon MS eine WAP-Session WAP-S etabliert ist.

Wie oben bereits erläutert, steuert der Benutzer mittels des Mobiltelefones MS unter optischer Beobachtung des Bildschirmes des Personalcomputers PC die beiden miteinander interagierenden Sitzungen WAP-S und WEB-S und bekommt über den Bildschirm alle relevanten Informationen auf HTTP-Basis in hoher Auslösung und Geschwindigkeit angezeigt.

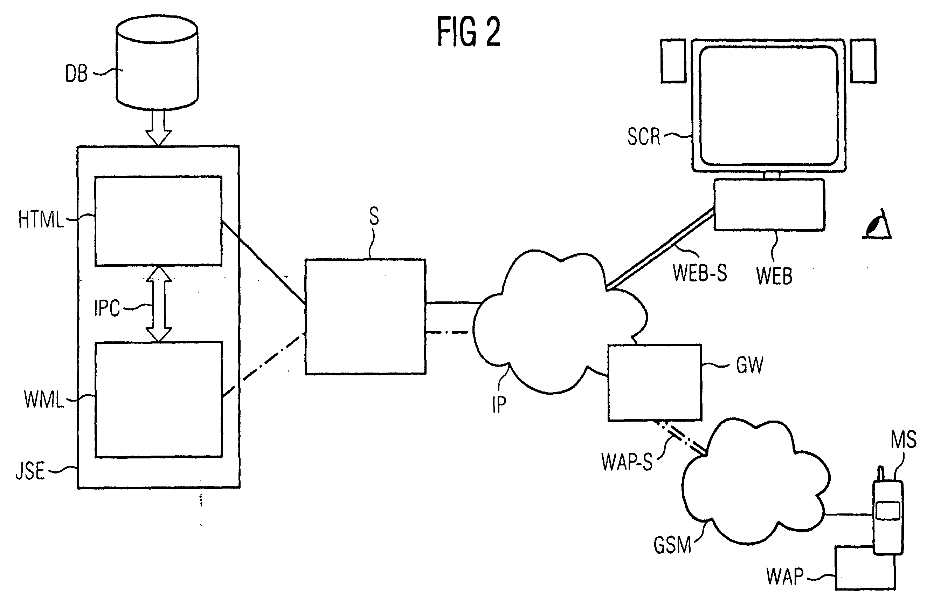

In Fig. 2 ist - in weitgehender Anlehnung an die Darstellung nach Fig. 1 - als erste wesentliche Anwendung die Steuerung einer Powerpoint-Präsentation auf einem Großbildschirm SCR mittels des Mobiltelefons MS skizziert. Es versteht sich, daß dem Großbildschirm SCR ein Rechner mit Standard-Internet-Browser WEB zugeordnet ist. Ein vollständiger PC ist bei dieser Anwendung nicht vorgesehen.

Als Standard-Internet-Browser wird hier der Netzscape-Navigator eingesetzt, weil bevorzugt zur Anzeige der Grafikdaten auf dem Großbildschirm ein MULTIPART-MIME-Content genutzt wird. Mittels des Mobiltelefons können insbesondere die Befehle "Vorwärts", "Rückwärts" und "Exit" (zur Beendigung der Web-Session) gegeben werden. Diesen Befehlen entsprechende PDU's, die von dem Servlet der WAP-Session an das Servlet der WEB-Session übergeben werden, ersetzen Tasteneingaben am fest angeschlossenen Endgerät.

Die einzelnen Darstellungen für die Präsentation werden vorab in ein browser-lesbares Grafikformat (beispielsweise JPG oder GIF) umgewandelt und werden vor der Übergabe an den (passiv wartenden) Standard-Internet-Browser WEB aus einem DAtenbasissystem DB ausgelesen.

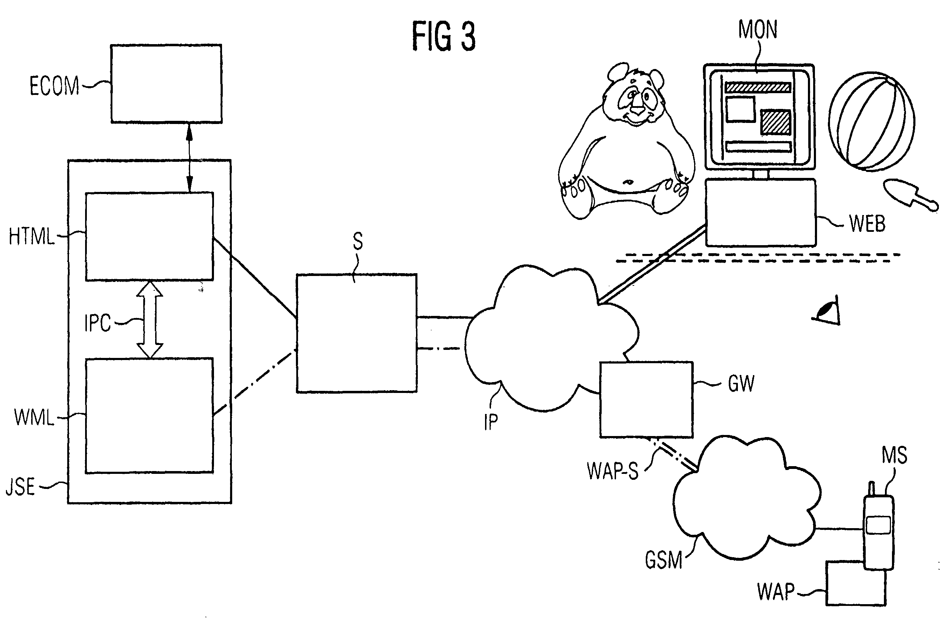

In Fig. 3 ist als weiterer Anwendungsfall ein Internet-Shopping unter Nutzung eines im Schaufenster eines Geschäftes neben einem Warenangebot aufgestellten Monitors MON skizziert. Die gesamte Logik ECOM zur Abwicklung elektronischer Transaktionen ist bei der JAVA-Servlet-Engine JSE des Servers S implementiert. Sie gewährleistet, daß auf dem Monitor MON eine Benutzerführung angezeigt und nach Anforderung über das Mobiltelefon MS schrittweise abgearbeitet werden kann - über die Bestellung bis hin zur Bezahlung.

Bei dieser Anwendung ist die einfache und zuverlässige Authentisierung des Benutzers über die SIM-Karte seines Mobiltelefons und die eingegebene PIN von besonderem Vorteil, da sie unter bestimmten Umständen den Verzicht auf zusätzliche Sicherungsmechanismen ermöglicht. Auf der anderen Seite ist für den Benutzer die große und hochaufgelöste Angebotspräsentation und Menüführung auf dem Farbmonitor des Geschäftes - verglichen mit dem kleinen und schlecht lesbaren Display seines Mobiltelefons - von erheblicher Attraktivität.

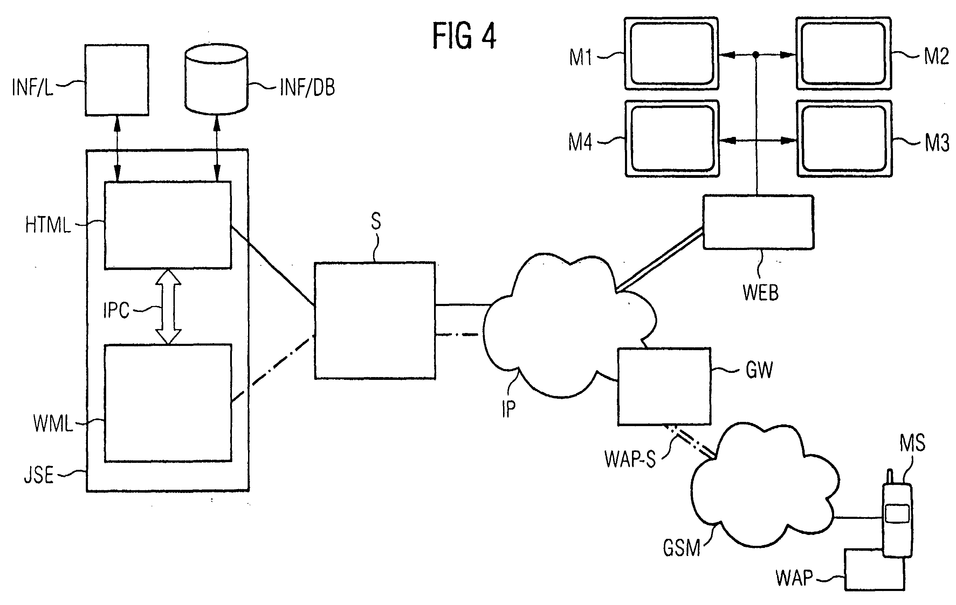

In Fig. 4 ist schließlich als weiteres Ausführungsbeispiel ein Informationssystem mit verteilten Anzeigebildschirmen M1 bis M4 und einem gemeinsamen Standard-Internet-Browser WEB skizziert. Auch hier sind ein logisches System INF/L sowie eine Datenbasis INF/DB zum Betrieb des Informationssystems beim Internet-Server S bzw. der JAVA-Servlet-Engine JSE implementiert.

Mit Hilfe der Monitore, die an bevorzugten öffentlichen Plätzen installiert sind, können vorbeikommende potentielle Internetnutzer über ihr Mobiltelefon MS Zugriff zum Internet erlangen und dann unter Zuhilfenahme der leistungsfähigen Darstellungsmöglichkeiten des HTTP die von ihnen gewünschten Arbeiten im Netz ausführen. Die Anzeigeeinheiten werden hier in gewissem Sinne über die Mobiltelefone für deren Benutzer "personalisiert". Wie auch bei den vorigen Beispielen, können die beteiligten HTTP-Verbindungen mittels SSL kryptografisch gesichert werden.

Die Monitore M1 bis M4 dienen hier ausschließlich als Anzeigeeinheiten, benötigen keine Tastatur und keine Zugangsmöglichkeit für den Benutzer und können daher in einer sie vor Umgebungseinflüssen und Vandalismus schützenden Art und Weise auch im Freien installiert werden.

Die Ausführung der Erfindung ist nicht auf die oben beschriebenen Beispiele und hervorgehobenen Aspekte beschränkt, sondern im Rahmen der Ansprüche ebenso in einer Vielzahl von Abwandlungen möglich, die im Rahmen fachgemäßen Handelns liegen.

Neben der oben mehrfach erwähnten Ausführung mit einem WAP-Mobiltelefon als Endgerät mit eingeschränkter Protokollfähigkeit bezüglich des Standard-IP-Protokolls ist die Erfindung vorteilhaft auch mit einem Datenendgerät ausführbar, das zwar zur Verarbeitung des Standard-IP-Protokolls ausgebildet ist, jedoch über eingeschränkte Ein- bzw. Ausgabemöglichkeiten verfügt - beispielsweise über einen Anzeigeschirm mit geringer Größe und/oder Auflösung. Auch mit Mobilfunk-Endgeräten künftiger Generationen (insbesondere UMTS-Endgeräten), die weitgehend an die Verarbeitung des HTTP bzw. TCP angepaßt sind, aber notwendigerweise ein kleines Display und keine vollwertige alphanumerische Tastatur haben, ist die Erfindung vorteilhaft ausführbar. Für derartige Geräte wird in den anhängenden Ansprüchen der Begriff "eingeschränkte Benutzerschnittstelle" gebraucht.

## Patentansprüche

1. Verfahren zum Zugriff auf ein IP-Netz, insbesondere das Internet, und zur Arbeit mit diesem bzw. mit an dieses angeschlossenen Ressourcen,
wobei in dem IP-Netz eine erste Sitzung (WEB-S) auf der Basis eines IP-Standardprotokolls mittels einer mindestens ausgabeseitig protokollkonform ausgelegten Benutzerschnittstelle (PC) etabliert und unterhalten wird,
**dadurch gekennzeichnet, daß**
parallel hierzu eine zweite Sitzung auf der Basis mindestens eines Mobilfunk-Protokolls (WAP) oder mittels einer Mobilfunk-Benutzerschnittstelle,(MS) etabliert und unterhalten wird derart, daß die erste und zweite Sitzung durch eine Interprozeßkommunikation (IPC) in einem IP-Netz-Server (S) zu einer verknüpften Sitzung verbunden sind.

2. Verfahren nach Anspruch 1,
**dadurch gekennzeichnet, daß**
die Etablierung der ersten Sitzung mittels eines ersten Endgerätes mit IP-Protokollfähigkeit direkt über einen IP-Netz-Server mit voller Protokollfähigkeit angesteuert, nach Etablierung der ersten Sitzung über das erste Endgerät oder ein zweites Endgerät mit Mobilfunk-Protokollfähigkeit die zweite Sitzung etabliert und
die erste Sitzung unter Einsatz des ersten Endgerätes zumindest als Ausgabegerät und die zweite Sitzung unter Einsatz des zweiten Endgerätes als Eingabegerät weitergeführt werden.

3. Verfahren nach Anspruch 1,
**dadurch gekennzeichnet, daß**
die Etablierung der ersten und zweiten Sitzung mittels eines Endgerätes mit Mobilfunk-Protokollfähigkeit und/oder mittels einer Mobilfunk-Benutzerschnittstelle über einen IP-Netz-Server mit voller Protokollfähigkeit angesteuert und die erste Sitzung unter Einsatz eines separaten Ausgabegerätes und die zweite Sitzung im wesentlichen unter Einsatz des Endgerätes als Eingabegerät weitergeführt werden.

4. Verfahren nach Anspruch 3,
**dadurch gekennzeichnet, daß**
das Ausgabegerät als zweites Endgerät zu Eingaben im Verlauf der ersten Sitzung ausgebildet ist und genutzt wird.

5. Verfahren nach einem der vorangehenden Ansprüche,
**dadurch gekennzeichnet, daß**
die Verbindung der ersten und zweiten Sitzung zur verknüpften Sitzung durch beim IP-Netz-Server implementierte JAVA-Servlets ausgeführt wird.

6. Verfahren nach Anspruch 5,
**dadurch gekennzeichnet, daß**
der Ablauf der ersten Sitzung und die während dieser erfolgenden Ausgaben durch ein JAVA-Servlet der zweiten Sitzung gesteuert werden.

7. Verfahren nach einem der vorangehenden Ansprüche,
**dadurch gekennzeichnet, daß**
bei der Etablierung der ersten oder zweiten Sitzung über das diese ansteuernde Endgerät eine Authentisierung des Nutzers vorgenommen wird.

8. Verfahren nach einem der vorangehenden Ansprüche,
**dadurch gekennzeichnet, daß**
über ein Mobilfunk-Endgerät eine Ablaufsteuerung eines auf dem ersten Endgerät bzw. Ausgabegerät ablaufenden Anzeigevorganges erfolgt.

9. Verfahren nach einem der Ansprüche 2 bis 7,
**dadurch gekennzeichnet, daß**
über Eingaben an einem Mobilfunk-Endgerät eine Bestellung und/oder Bezahlung von Waren oder Dienstleistungen im Rahmen einer mindestens teilweise auf dem anderen Endgerät oder Ausgabegerät angezeigten Menüführung erfolgt.

10. Verfahren nach einem der vorangehenden Ansprüche,
**dadurch gekennzeichnet, daß**
als IP-Standardprotokoll das HTTP genutzt wird.

11. Verfahren nach einem der vorangehenden Ansprüche,
**dadurch gekennzeichnet, daß**
als Mobilfunk-Protokoll das WAP genutzt wird.

12. Verfahren nach einem der Ansprüche 2 bis 10 und Anspruch 11,
**dadurch gekennzeichnet, daß**
als Endgerät mit Mobilfunk-Protokollfähigkeit ein nach dem WAP arbeitendes Mobilfunk-Endgerät über ein WAP-Gateway die erste und wahlweise auch zweite Sitzung etabliert.

13. Anordnung zur Durchführung des Verfahrens nach einem der vorangehenden Ansprüche, mit
- einem zur Etablierung einer ersten Sitzung vorgesehenen Endgerät oder Ausgabegerät (PC) mit IP-Protokollfähigkeit und IP-konformer Benutzerschnittstelle,
- einem zur Etablierung einer zweiten Sitzung vorgesehenen Endgerät (MS) mit Mobilfunk-Protokollfähigkeit, die bezüglich eines IP-Standardprotokolls eingeschränkt ist, oder einer Mobilfunk-Benutzerschnittstelle, und
- einem mit dem Endgerät und dem Ausgabegerät oder den Endgeräten verbundenen oder verbindbaren IP-Netz-Server(S), in dem Mittel zur Etablierung der ersten und zweiten Sitzung und deren Aufrechterhaltung als verknüpfte Sitzung durch eine Interprozeßkommunikation (IPC) implementiert sind.

14. Anordnung nach Anspruch 13,
**dadurch gekennzeichnet, daß**
die im IP-Netz-Server implementierten Mittel zur Etablierung der ersten und zweiten Sitzung und deren Aufrechterhaltung als verknüpfte Sitzung JAVA-Servlets umfassen.

15. Anordnung nach Anspruch 13 oder 14,
**dadurch gekennzeichnet, daß**
zwischen ein nach dem WAP arbeitendes Mobilfunk-Endgerät und den IP-Netz-Server ein WAP-Gateway geschaltet ist.

## Claims

1. Method for access to an IP network, in particular the Internet, and for working with it or with resources connected to it,
in which case, in the IP network, a first session (WEB-S) on the basis of an IP standard protocol is established and maintained by means of a user interface (PC) that is of protocol-conforming design at least on the output side,
**characterized in that**,
in parallel therewith, a second session on the basis of at least one mobile radio protocol (WAP) or by means of a mobile radio user interface (MS) is established and maintained in such a way that the first and second sessions are connected by an interprocess communication (IPC) in an IP network server (S) to form a linked session.

2. Method according to Claim 1,
**characterized in that**
the establishment of the first session is driven by means of a first terminal with IP protocol capability directly via an IP network server with full protocol capability,
the second session is established after the establishment of the first session by means of the first terminal or a second terminal with mobile radio protocol capability and
the first session is continued using the first terminal at least as an output device and the second session is continued using the second terminal as an input device.

3. Method according to Claim 1,
**characterized in that**
the establishment of the first and second sessions is driven by means of a terminal with mobile radio protocol capability and/or by means of a mobile radio user interface via an IP network server with full protocol capability, and
the first session is continued using a separate output device and the second session is continued essentially using the terminal as an input device.

4. Method according to Claim 3,
**characterized in that**
the output device is designed and utilized as a second terminal for inputs in the course of the first session.

5. Method according to one of the preceding claims,
**characterized in that**
the connection of the first and second sessions to form the linked session is executed by JAVA servlets implemented in the IP network server.

6. Method according to Claim 5,
**characterized in that**
the sequence of the first session and the outputs effected during the latter are controlled by a JAVA servlet of the second session.

7. Method according to one of the preceding claims,
**characterized in that**
an authentication of the user is performed during the establishment of the first or second session by means of the terminal driving the latter.

8. Method according to one of the preceding claims,
**characterized in that**
a sequence control of a display operation proceeding on the first terminal or output terminal is effected by means of a mobile radio terminal.

9. Method according to one of Claims 2 to 7,
**characterized in that**
ordering and/or payment of goods or services in the context of a menu guide which is at least partly displayed on the other terminal or output terminal is effected by means of inputs on a mobile radio terminal.

10. Method according to one of the preceding claims,
**characterized in that**
the HTTP is utilized as the IP standard protocol.

11. Method according to one of the preceding claims,
**characterized in that**
the WAP is utilized as the mobile radio protocol.

12. Method according to one of Claims 2 to 10 and Claim 11,
**characterized in that**,
as the terminal with mobile radio protocol capability, a mobile radio terminal operating according to the WAP establishes the first and optionally also second session via a WAP gateway.

13. Arrangement for carrying out the method according to one of the preceding claims, having
- a terminal or output device (PC) - provided for establishing a first session - with IP protocol capability and IP-conforming user interface,
- a terminal (MS) - provided for establishing a second session - with mobile radio protocol capability, which is restricted with regard to an IP standard protocol, or a mobile radio user interface, and
- an IP network server (S) which is connected or can be connected to the terminal and the output device or the terminals and in which means are implemented for the establishment of the first and second sessions and the maintenance thereof as a linked session by an interprocess communication (IPC).

14. Arrangement according to Claim 13,
**characterized in that**
the means - implemented in the IP network server - for the establishment of the first and second sessions and the maintenance thereof as a linked session comprise JAVA servlets.

15. Arrangement according to Claim 13 or 14,
**characterized in that**
a WAP gateway is connected between a mobile radio terminal operating according to the WAP and the IP network server.

## Revendications

1. Procédé pour accéder à un réseau IP, notamment à internet, et pour travailler avec celui-ci ou avec des ressources raccordées à celui-ci,
dans lequel on établit et entretient dans le réseau IP une première session (WEB-S) sur la base d'un protocole standard IP au moyen d'une interface utilisateur (PC) conçue conformément au protocole au moins du côté de la sortie,
**caractérisé par le fait que**, parallèlement, on établit et entretient une deuxième session sur la base d'au moins un protocole de radiocommunication mobile (WAP) ou au moyen d'une interface utilisateur de radiocommunication mobile (MS) de telle sorte que la première et la deuxième session sont réunies par une communication interprocessus (IPC) dans un serveur de réseau IP (S) en une session combinée.

2. Procédé selon la revendication 1,
**caractérisé par le fait que**
on commande l'établissement de la première session au moyen d'un premier terminal avec capacité de protocole IP directement par l'intermédiaire d'un serveur de réseau IP avec capacité de protocole complète,
après l'établissement de la première session, on établit la deuxième session par l'intermédiaire du premier terminal ou d'un deuxième terminal avec capacité de protocole de radiocommunication mobile, et
on poursuit la première session en utilisant le premier terminal au moins comme appareil de sortie et la deuxième session en utilisant le deuxième terminal comme appareil d'entrée.

3. Procédé selon la revendication 1,
**caractérisé par le fait que**
on commande l'établissement de la première et de la deuxième session au moyen d'un terminal avec capacité de p rotocole de radiocommunication mobile et/ou au moyen d'une interface utilisateur de radiocommunication mobile par l'intermédiaire d'un serveur de réseau IP avec capacité de protocole complète, et
on poursuit la première session en utilisant un appareil de sortie séparé et la deuxième session globalement en utilisant le terminal comme appareil d'entrée.

4. Procédé selon la revendication 3,
**caractérisé par le fait que** l'appareil de sortie est conçu comme deuxième terminal pour des entrées au cours de la première session et est utilisé ainsi.

5. Procédé selon l'une des revendications précédentes,
**caractérisé par le fait que** la réunion de la première et de la deuxième session en une session combinée est réalisée par des servlets JAVA mis en oeuvre dans le serveur de réseau IP.

6. Procédé selon la revendication 5,
**caractérisé par le fait que** le déroulement de la première session et les sorties s'effectuant pendant celle-ci sont commandés par un servlet JAVA de la deuxième session.

7. Procédé selon l'une des revendications précédentes,
**caractérisé par le fait que**, lors de l'établissement de la première ou de la deuxième session, une authentification de l'utilisateur est effectuée par l'intermédiaire du terminal commandant cette session.

8. Procédé selon l'une des revendications précédentes,
**caractérisé par le fait qu'**une commande séquentielle d'une opération d'affichage se déroulant sur le premier terminal ou appareil de sortie s'effectue par l'intermédiaire d'un terminal de radiocommunication mobile.

9. Procédé selon l'une des revendications 2 à 7,
**caractérisé par le fait qu'**une commande et/ou un paiement de marchandises ou de services s'effectue par l'intermédiaire d'entrées sur un terminal de radiocommunication mobile dans le cadre d'un guidage par menu affiché au moins en partie sur l'autre terminal ou appareil de sortie.

10. Procédé selon l'une des revendications précédentes,
**caractérisé par le fait qu'**on utilise le HTTP comme protocole standard IP.

11. Procédé selon l'une des revendications précédentes,
**caractérisé par le fait qu'**on utilise le WAP comme protocole de radiocommunication mobile.

12. Procédé selon l'une des revendications 2 à 10 et selon la revendication 11,
**caractérisé par le fait que**, en tant que terminal avec capacité de protocole de radiocommunication mobile, un terminal de radiocommunication mobile travaillant selon le WAP établit par l'intermédiaire d'une passerelle WAP la première session et, optionnellement, aussi la deuxième session.

13. Dispositif pour la mise en oeuvre du procédé selon l'une des revendications précédentes, comportant
- un terminal ou appareil de sortie (PC) prévu pour l'établissement d'une première session et ayant une capacité de protocole IP et une interface utilisateur conforme à IP,
- un terminal (MS) prévu pour l'établissement d'une deuxième session et ayant une capacité de protocole de radiocommunication mobile, qui est retreinte par rapport à un protocole standard IP, ou une interface utilisateur de radiocommunication mobile, et
- un serveur de réseau IP (S) qui est ou peut être relié au terminal et à l'appareil de sortie ou aux terminaux et dans lequel sont mis en oeuvre des moyens pour l'établissement de la première et de la deuxième session et pour leur maintien en tant que session combinée par une communication interprocessus (IPC).

14. Dispositif selon la revendication 13,
**caractérisé par le fait que** les moyens mis en oeuvre dans le serveur de réseau IP pour l'établissement de la première et de la deuxième session et pour leur maintien en tant que session combinée comprennent des servlets JAVA.

15. Dispositif selon la revendication 13 ou 14,
**caractérisé par le fait qu'**une passerelle WAP est insérée entre un terminal de radiocommunication mobile travaillant selon le WAP et le serveur de réseau IP.
